# EUROPÄISCHE PATENTSCHRIFT

(11) **EP 2 321 542 B1**
(45) Veröffentlichungstag und Bekanntmachung des Hinweises auf die Patenterteilung: **09.09.2015**
(21) Anmeldenummer: 09781156.6
(22) Anmeldetag: 28.07.2009
(51) Int. Cl.: F16B 23/00, F16B 41/00

(54) **SCHRAUBENANTRIEBSAUSBILDUNG**
SCREW DRIVE DESIGN
AGENCEMENT D'ENTRAÎNEMENT POUR VIS

(30) Priorität: 31.07.2008 DE 102008036577
(43) Veröffentlichungstag der Anmeldung: 18.05.2011
(73) Patentinhaber: Arnold Umformtechnik GmbH & Co. KG, 74670 Forchtenberg-Ernsbach (DE)
(72) Erfinder: WERNER, Patrick, 74653 Ingelfingen (DE); MÖLLER, Gerhard, 74670 Forchtenberg (DE); DÖLLNER, Dirk, 74074 Heilbronn (DE)
(74) Vertreter: Patentanwälte Ruff, Wilhelm, Beier, Dauster & Partner
(86) Internationale Anmeldenummer: PCT/EP2009/059702
(87) Internationale Veröffentlichungsnummer: WO 2010/012706

(56) Entgegenhaltungen:
- WO-A-2006/067372
- CH-A- 201 705
- DE-A1- 3 403 063
- DE-U1- 7 901 702
- US-A- 3 253 625

## Beschreibung

Die Erfindung betrifft eine Antriebsausbildung für Schrauben, Muttern oder dergleichen, insbesondere nach dem oberbegriff des Anspruchs 1 bzw. 2. Eine derartige Antriebsansbildung ist aus der US 3,253,625 A bekannt. Es gibt Fälle, in denen aus Sicherheitsgründen Schrauben oder Muttern in einer Weise befestigt werden müssen, die ein Lösen der Schraube beziehungsweise Mutter ausschließen. Bisher ist es üblich, in solchen Fällen den Schraubenantrieb, der zum Ansetzen eines Werkzeugs dient, nach dem Befestigen der Schraube unbrauchbar zu machen. Dies kann beispielsweise durch Ausbohren geschehen, oder aber durch Einschlagen von Stopfen, die damit das Einsetzen eines Werkzeugs in die Antriebsausbildung verhindern. Darüber hinaus gibt es Abreißschrauben, bei denen eine Sollbruchstelle vorhanden ist, die bei Erreichen des erforderlichen Drehmomentes nachgibt. Alle diese Systeme haben den Nachteil, dass sie eine zusätzliche Maßnahme erfordern und zum Teil auch umständlich gehandhabt werden müssen. Außerdem gibt es bei Abreißschrauben das Problem der Korrosion.

Es ist bereits eine Schraube bekannt, zu deren Drehantrieb in einer Vertiefung des Schraubenkopfs drei dreieckförmige jeweils in einer Radialebene liegende Anschlagflächen vorhanden sind. Mit einem speziellen Schraubendreher lassen sich diese Schrauben einschrauben, während bei einer Verdrehung des Werkzeugs in umgekehrtem Drehsinn kein Antrieb erfolgt (DE 3403063 A1).

Weiterhin ist ein Schraubenkopf bekannt, dessen Stirnfläche sägezahnförmig ausgebildet ist, so dass er bei Verwendung eines Werkzeugs mit komplementärer Ausbildung nur in eine Richtung verdreht werden kann, während eine Verdrehung des Werkzeugs in umgekehrter Drehrichtung zu einem Abgleiten des Werkzeugs führt (DE 7901702 U1).

Bei einem weiteren Befestigungselement sind gekrümmte in Zylinderflächen liegende Angriffsflächen für ein Werkzeug vorhanden, so dass das Befestigungselement nur mit einem Spezialwerkzeug verdreht werden kann, allerdings in beide Richtungen (WO 2006/067372 A1).

Weiterhin bekannt ist eine nur in einer Richtung verdrehbare Schraube, bei der die Schraubenantriebsausbildung in einer Vertiefung in der Stirnfläche des Schraubenkopfs angeordnet ist, die von einer auf einer Kegelfläche liegenden Wand begrenzt ist (US 3,253,625A).

Weiterhin bekannt ist eine mit einem zylindrischen Kopf versehene Schraube, bei der in der Stirnfläche des Schraubenkopfs zwei quer verlaufende Angriffsflächen für ein Spezialwerkzeug und zwei Übergangsflächen ausgebildet sind, so dass die Schraube nur in eine Richtung verdreht werden kann (CH 201705A).

Der Erfindung liegt die Aufgabe zu Grunde, eine Möglichkeit zu schaffen, durch Schrauben herzustellende Verbindungen derart auszugestalten, dass sie sich nur schwer oder nur unter Zerstörung wieder lösen lassen.

Zur Lösung dieser Aufgabe schlägt die Erfindung eine Antriebsausbildung für ein zu verschraubendes Befestigungselement mit den Merkmalen des Anspruchs 1 oder mit den Merkmalen des Anspruchs 2 vor. Die Erfindung schlägt ebenfalls eine Antriebsausbildung für ein zugehöriges Werkzeug vor. Weiterbildungen der Erfindung sind Gegenstand von Unteransprüchen.

Dies bedeutet, dass man das Befestigungselement zwar in der einen Richtung, natürlich der Einschraubrichtung, mit einem Werkzeug verdrehen kann, dass aber in umgekehrter Drehrichtung keine Drehmomentübertragung möglich ist. Dies kann beispielsweise dadurch erreicht werden, dass die Übergangsflächen so schräg verlaufen, dass bei einer in Drehrichtung aufgebrachten Kraft eine Kraftkomponente erzeugt wird, die das Werkzeug aus der Vertiefung heraus drängt.

Die Übergangsflächen, die zur Führung des Werkzeugs beim Drehantrieb dienen, können in Weiterbildung der Erfindung als nach innen gerichtete Innenflächen ausgebildet sein. Das Werkzeug greift also an ihnen mit einer radialen Außenseite an.

Es ist aber ebenfalls möglich und liegt im Rahmen der Erfindung, dass die Übergangsflächen als radiale Außenflächen ausgebildet sind. In diesem Fall greift das Werkzeug an den Außenflächen an.

Insbesondere kann vorgesehen sein, dass die Antriebsflächen und die Übergangsflächen in einer von einer Stirnfläche des Befestigungselements ausgehenden Vertiefung ausgebildet sind. Hierbei handelt es sich beispielsweise um eine Schraube, bei der die Stirnfläche des Schraubenkopfs den Zugang zu der Vertiefung ermöglicht. In diesem Fall enthält also der Schraubenkopf einer solchen Schraube eine Vertiefung, in der mindestens zwei zur Übertragung eines Drehmomentes bei Verdrehen mit einem Werkzeug in einer Drehrichtung geeignete Antriebsflächen angeordnet sind, zwischen denen Übergangsflächen angeordnet sind, die bei Angriff des Werkzeugs in der anderen Richtung eine axiale Verschiebung des Werkzeugs aus der Vertiefung heraus bewirken.

Um eine besonders wirksame Kraftübertragung beim Einschrauben der Schraube zu bewirken, kann erfindungsgemäß vorgesehen sein, dass die Antriebsflächen in Radialebenen angeordnet sind. Es ist aber auch ein gewisses Abweichen von der Radialebene möglich, so dass die Erfindung in Weiterbildung vorschlägt, dass die Antriebsflächen in einem quer zur Achse der Schraube verlaufenden Querschnitt durch die Antriebsausbildung jeweils auf einem Radius liegen oder parallel zueinander und zu einem Radius verlaufen.

Bei einer geradzahligen Anzahl von Antriebsflächen kann erfindungsgemäß daher vorgesehen sein, dass die Antriebsflächen in einem quer zur Achse der Schraube verlaufenden Querschnitt durch die Antriebsausbildung auf einem Durchmesser liegen oder parallel zueinander und zu einem Durchmesser verlaufen.

In einem Längsschnitt durch das Befestigungselement verlaufen die Antriebsflächen vorzugsweise parallel zur Achse oder in der Achse.

In Weiterbildung der Erfindung kann vorgesehen sein, dass sich die Antriebsflächen eine Antriebskante bilden, die schräg zur Achse verläuft, wobei die Antriebskanten aller Antriebsflächen in Richtung auf die Stirnseite des Schraubenkopfs divergieren.

Beispielsweise können sich die Antriebskanten zwischen der Wand der Vertiefung und dem Boden der Vertiefung erstrecken.

Erfindungsgemäß kann vorgesehen sein, dass die Übergangsflächen als Keilflächen ausgebildet sind, wobei der Keil so orientiert ist, dass bei Aufbringen eines Drehmomentes in umgekehrter Einschraubrichtung eine Kraftkomponente aus der Vertiefung heraus erzeugt wird.

Insbesondere kann vorgesehen sein, dass sich die Übergangsflächen zwischen der Antriebskante einer Antriebsfläche, der Verbindung der Antriebsfläche mit dem Boden der Vertiefung und der Wand der Vertiefung erstrecken.

Als besonders sinnvoll hat es sich herausgestellt, wenn die Antriebsausbildung eine ungerade Anzahl von Antriebsflächen und Übergangsflächen aufweist.

In Weiterbildung der Erfindung kann vorgesehen sein, dass die Vertiefung mindestens teilweise einen in Richtung von der Stirnseite des Schraubenkopfs weg abnehmenden Querschnitt aufweist. Dies ist insbesondere bei Senkkopfschrauben sinnvoll.

In Weiterbildung der Erfindung kann vorgesehen sein, dass die Vertiefung mindestens teilweise zylindrisch ausgebildet ist. Eine solche zylindrische Vertiefung kann dazu dienen, ein Werkzeug besser zu führen als bei einer von Anfang an sich im Querschnitt verringernden Vertiefung.

Erfindungsgemäß kann vorgesehen sein, dass die Vertiefung in eine punktförmige Spitze ausläuft.

Es ist aber ebenfalls möglich und wird von der Erfindung vorgeschlagen, dass die Vertiefung einen Boden aufweist, deren vorzugsweise eben ausgebildet ist.

Erfindungsgemäß ist vorgesehen, dass die Wand der Vertiefung in mindestens einem axialen Bereich auf einer Zylindermantelfläche liegt, insbesondere in einem von der Stirnfläche des Schraubenkopfs ausgehenden Bereich.

Der von der Erfindung ebenfalls vorgeschlagenen Schraubendreher weist ein freies Ende auf, dessen Antriebsausbildung komplementär zu der Antriebsausbildung des Schraubenkopfs ausgebildet ist.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: die perspektivische schematische Ansicht des freien Endes eines Schraubendrehers;
- Figur 2: einen Teilschnitt durch einen Schraubenkopf;
- Figur 3: schematisch eine Seitenansicht des vorderen Endes eines Schraubendrehers;
- Figur 4: eine der Figur 3 entsprechende Darstellung;
- Figur 5: eine schematischen Darstellung der Vertiefung in einem Schraubenkopf;
- Figur 6: eine der Figur 5 entsprechende Darstellung bei einer abgeänderten Ausführungsform;
- Figur 7: die Seitenansicht des vorderen Endes eines Schraubendrehers;
- Figur 8: eine der Figur 7 entsprechende Darstellung bei einer abgeänderten Ausführungsform;
- Figur 9: die Seitenansicht eines Schrauberbits;
- Figur 10: die Stirnansicht des Schrauberbits der Figur 9;
- Figur 11: eine Seitenansicht einer Schraube;
- Figur 12: eine perspektivische Darstellung des vorderen Endes des Schrauberbits;
- Figur 13: eine weitere perspektivische Darstellung einer Mutter;
- Figur 14: einen Axialschnitt durch die Mutter der Figur 13;
- Figur 15: eine Draufsicht auf die Mutter der Figur 13 und 14;
- Figur 16: eine Darstellung einer weiteren Ausführungsform;
- Figur 17: einen Axialschnitt durch die Mutter der Figur 16;
- Figur 18: eine Draufsicht auf die Mutter der Figur 16 und 17.

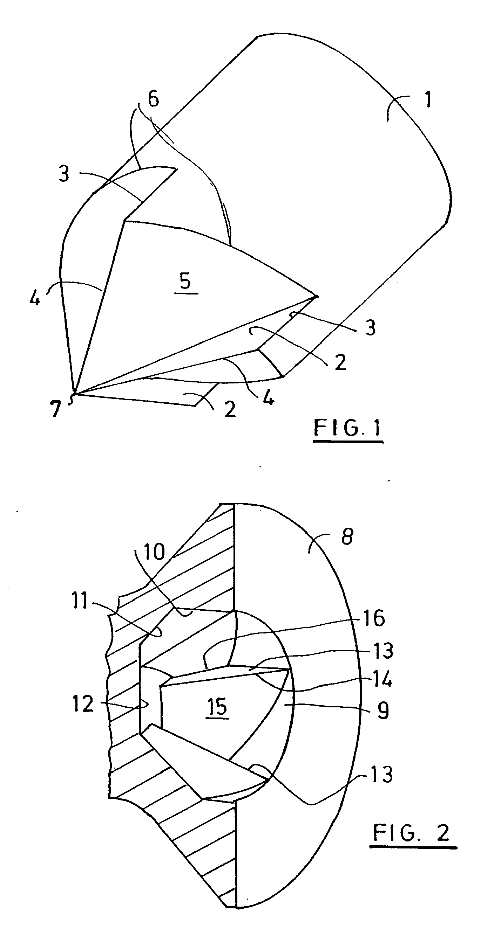

Figur 1 zeigt perspektivisch das vordere Ende eines Schraubendrehers, der einen kreiszylindrischen Schafts 1 aufweist. Da die Antriebsausbildung für die Schraube und für den Schraubendreher komplementär zueinander ausgebildet sind, sich die Anordnung der verschiedenen Flächen aber an einer nach außen gerichteten Fläche wie bei einem Schraubendreher besser darstellen lässt als in einer Vertiefung, werden im folgenden beide Arten der Darstellung verwendet. An dem Schaft 1 des Schraubendrehers sind Antriebsflächen 2 ausgebildet, die in einer Radialebene liegen. Die Antriebsflächen 2 sind einerseits durch die zylindrische Außenseite des Schafts 1 begrenzt und bilden dort eine Kante 3. Die kegelförmige Spitze des Schraubendreherschafts 1 bildet dann mit der Antriebsfläche 2 eine zweite Kante 4, die im folgenden als Antriebskante bezeichnet werden wird. Die Antriebsflächen 2 erstrecken sich also von der Außenseite des Schafts an der Kante 3 in das Material des Schraubendreherschafts 1 hinein.

Von den Antriebskanten 4 erstrecken sich dann Übergangsflächen 5, die mit der Außenseite des Schafts 1 eine Begrenzungslinie 6 bilden. Sie erstrecken sich also von der nach vorne gerichteten Antriebskante 4 jeweils einer Antriebsfläche zu dem gegenüberliegenden Ende der Antriebsfläche 2. Von der Seite aus gesehen bilden die Übergangsflächen 5 also Keilflächen, während die Antriebsflächen 2 in Radialebenen liegen.

Verdreht man den Schraubendreher um seine Längsachse, erzeugen bei einer Rechtsdrehung die Antriebsflächen 2 ein Drehmoment in Drehrichtung, während bei einer Linksdrehung die Übergangsflächen 5 eine Kraftkomponente auch in Axialrichtung erzeugen. Aufgrund der Ausbildung der Übergangsflächen 5 ist diese Kraftkomponente in Axialrichtung größer als die Kraftkomponente in Umfangsrichtung. Da der Teil der Antriebsflächen 2 unmittelbar im Bereich der Spitze 7 nur einen geringen Beitrag zur Übertragung des Drehmomentes liefern kann, kann erfindungsgemäß diese Spitze auch abgeflacht werden, beispielsweise in Form einer ebenen Stirnfläche.

Figur 2 zeigt einen Schnitt durch einen Schraubenkopf. Es handelt sich dabei um einen Senkkopf. Von einer ebenen Stirnfläche 8 ausgehend ist in dem Schraubenkopf eine Vertiefung 9 untergebracht. Die Vertiefung 9 hat in ihrem sich unmittelbar an die Stirnfläche 8 anschließenden Bereich einen zylindrischen Querschnitt beziehungsweise eine zylindrische Wand 10, die im Schnitt zu sehen ist. An diesen Bereich schließt sich dann ein Bereich an, in dem die Wand 11 der Vertiefung 9 auf einer Kegelfläche liegt, sich also in das Innere der Vertiefung hinein kontinuierlich verringert. Abgeschlossen ist die Vertiefung von einem Boden 12.

In der Vertiefung sind nach innen ragende Vorsprünge ausgebildet, die komplementär zu der Anordnung der Flächen sind, wie sie die Figur 1 zeigt. Es sind also Antriebsflächen 13 vorhanden, die sich zwischen dem Boden 12 und der Wand 10 in der Vertiefung erstrecken. Diese Antriebsflächen 13 liegen auch hier in einer Radialebene. Sie bilden an der nach innen gerichteten Seite Antriebskanten 14, entsprechend den Antriebskanten 4 des Werkzeugs in Figur 1. Von den Antriebskanten 14 der Antriebsflächen 13 aus erstrecken sich die Übergangsflächen 15, die eine Verbindung mit der Wand 10 der Vertiefung bilden. Auch hier verlaufen die Übergangsflächen 15 keilförmig von der der Antriebskante 14 jeder Antriebsfläche 13 abgewandten Außenkante 16 der Antriebsfläche 13 zu der Antriebskante 14 der nächsten Antriebsfläche 13.

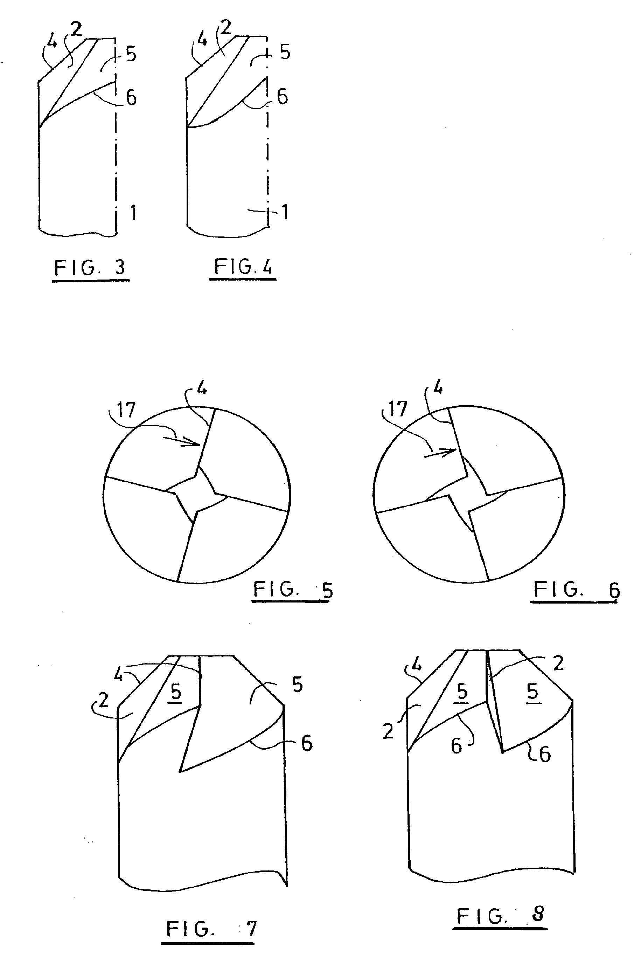

In Figur 1 wurde schon erwähnt, dass die Übergangsflächen 5 mit der Außenseite des Schafts 1 eine Kante sechs bilden. Eine solche Kante 6 wird von den Übergangsflächen 15 auch in der Vertiefung gebildet. Die Figuren 3 bis 6 zeigen nun, wie diese Übergangskanten 6, die auch die Form der Übergangsflächen 5 definieren, gestaltet sein können.

In Figur 3 ist eine Möglichkeit dargestellt, bei der die die Übergangsflächen 5 nach außen begrenzende Kante 6 konvex gestaltet ist. Damit ist auch die Übergangsflächen 5 keilförmig konvex gestaltet.

Bei der Ausbildung nach Figur 4 verläuft die Übergangskante 6 konkav, was bedeutet, dass die Übergangsfläche 5 ebenfalls konkav ausgebildet ist.

Die Figuren 5 und 6 zeigen eine Draufsicht auf Antriebsausbildungen, wobei es sich sowohl um die Antriebsausbildung eines Werkzeugs als auch um die Antriebsausbildung einer angetriebene Schraube handeln kann. Die Antriebsflächen2 beziehungsweise 13 sind hier durch ihre Antriebskanten 4 bei dem Schraubendreher beziehungsweise 14 bei der Vertiefung gekennzeichnet. Ein Antrieb soll in Richtung des Pfeils 17 geschehen. Jeweils zwei Antriebskanten 4 verlaufen parallel zueinander und parallel zu einem Durchmesser, wobei bei der Anordnung der Figur 5 die Antriebskanten 4 in Antriebsrichtung vor dem Durchmesser liegen, während bei der Anordnung der Figur 6 die Antriebskanten 4 jeweils hinter dem Durchmesser liegen, zu dem sie gemeinsam parallel verlaufen.

Unter Bezugnahme auf Figur 1 wurde erwähnt, dass die Antriebsflächen 2 in einer Radialebene liegen. Damit soll erreicht werden, dass das Drehmoment in Drehrichtung übertragen wird. Es sind aber auch Abweichungen von dieser Radialebene möglich, sofern dafür gesorgt wird, dass Kräfte in anderer Richtung als in Drehrichtung vernachlässigbar klein sind oder aber nicht stören. Figur 7 zeigt nun eine Anordnung, bei der die Antriebsfläche 2 hinter einer Radialebene zurückweist, so dass eine Kraftkomponente in die Vertiefung 9 der Schraube hinein erzeugt wird. Diese Kraftkomponente ist aber vernachlässigbar klein.

Figur 8 zeigt eine Ausführungsform, bei der die Antriebsfläche 2 vor der Radialebene liegt, wobei auch hier eine gewisse Kraftkomponente in Axialrichtung erzeugt wird, die aber ebenfalls vernachlässigbar klein ist. Eine solche Lösung, wie sie die Figur 8 zeigt, ist möglicherweise leichter herstellbar als eine exakte Radialebene.

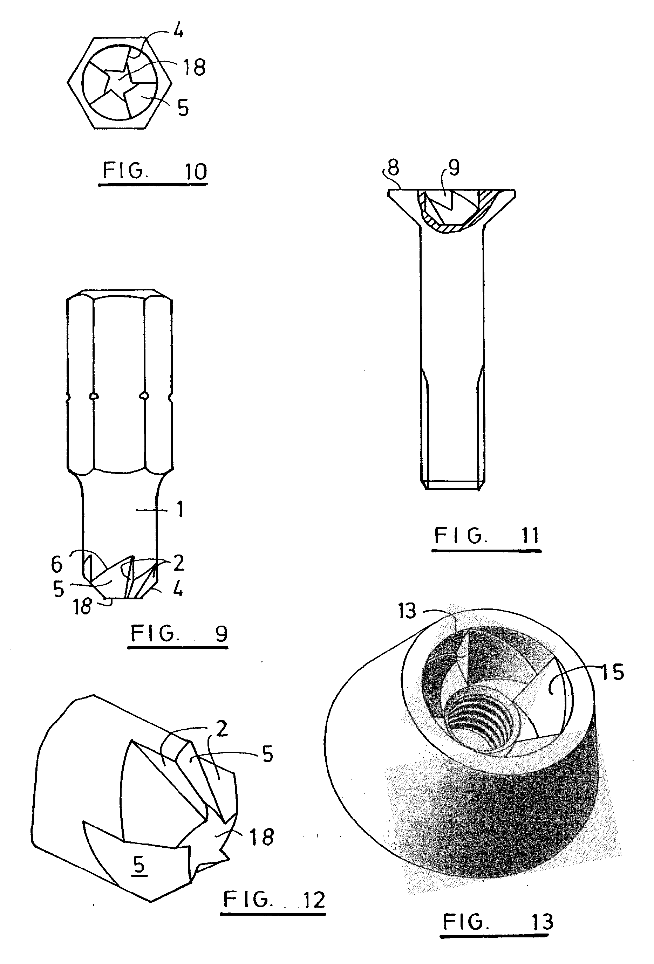

Die Figur 9 zeigt nun die Seitenansicht eines Schrauberbits, der in einen üblichen Schrauberantrieb eingesetzt werden kann. An dem dem Sechskantende gegenüberliegenden freien Ende weist der Schrauberbit eine Ausbildung auf, wie sie in Figur 3 bis Figur 4 und Figur 8 angedeutet wurde. Hier liegen die Antriebsflächen 2 in einer Ebene vor einer Radialebene, entsprechend Figur 8.

Figur 10 zeigt die Ansicht des Schrauberbits der Figur 9 von unten in Figur 9, ähnlich wie die Figuren 5 und 6. Es ist auch hier zu sehen, dass fünf Antriebskanten 4 vorhanden sind, die gleichmäßig über den Umfang verteilt sind.

Figur 11 zeigt nun eine Schraube mit einem Senkkopf, in dessen Antriebsvertiefung 9 die Flächen derart ausgebildet sind, wie sie komplementär zu der Ausbildung des Schrauberbits der Figur 9 geformt sind.

Figur 12 zeigt in einer isometrischen Darstellung das vordere Ende des Schrauberbits der Figur 9, mit den Antriebsflächen 2, den Übergangsflächen 5, den Antriebskanten 4 und dem vorderen sternförmigen flachen Stirnende 18, das dem Boden 12 der Schraubenantriebsvertiefung 9 der Figur 2i entspricht.

Während die bisherigen Figuren sich mit der Darstellung von Schrauben und zugehörigen Werkzeuge befassen, zeigen die folgenden Figuren Muttern, die nach dem gleichen Prinzip aufgebaut sind.

Figur 13 bis Figur 15 zeigen eine Mutter, bei der die Form der Übergangsflächen 15 und der Antriebsflächen 13 in der gleichen Weise ausgebildet ist wie bei der Schraube nach Figur 2, mit dem einzigen Unterschied, dass anstelle eines ebenen Bodens 12 hier die Gewindebohrung 20 vorhanden ist.

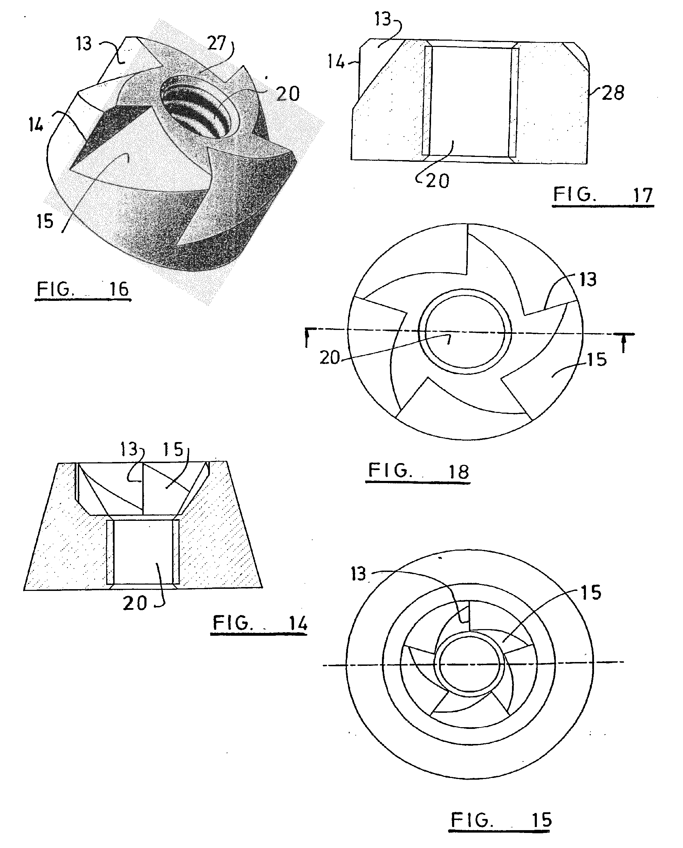

Figur 16 zeigt wieder eine andere Ausführungsform einer Mutter. Von einer Stirnfläche 27 aus geht eine Gewindebohrung 20 durch die Mutter hindurch. Von dem Umfang der Gewindebohrung 20 erstreckt sich eine Reihe von Antriebsflächen 13 radial nach außen, und zwischen den Antriebsflächen 13 erstrecken sich die als Führungsflächen dienenden Übergangsflächen 15. Außerhalb der Übergangsflächen 15 liegt die Außenseite 28 der Mutter in einem Zylindermantel, siehe auch die Figur 17.

Bei den dargestellten Ausführungsbeispielen handelt es sich um Schrauben und Muttern, sowie um das jeweils komplementär hierzu ausgebildete Werkzeug. Natürlich gibt es auch für die Muttern mit den an der Außenseite angeordneten Flächen entsprechende Werkzeuge, die aber nicht im einzelnen dargestellt sind.

Natürlich kann auch ein Schraubenkopf eine Ausbildung aufweisen, wie sie die Muttern der Figuren 13 bis 18 zeigen.

## Patentansprüche

1. Antriebsausbildung für ein zu verschraubendes Befestigungselement, mit
1.1 mindestens zwei an dem Befestigungselement ausgebildeten zur Übertragung eines Drehmomentes bei Verdrehen mit einem Werkzeug in einer ersten Drehrichtung geeigneten Antriebsflächen (13), wobei
1.2 zwischen diesen Antriebsflächen (13) jeweils eine Übergangsfläche (15) angeordnet ist, wobei die übergangsflächen (15)
1.3 bei Verdrehen des Werkzeugs in der ersten Drehrichtung eine Führungsfläche für das Werkzeug bilden und
1.4 bei Angriff des Werkzeugs in der anderen Drehrichtung eine axiale Verschiebung des Werkzeugs nach außen bewirken,
**dadurch gekennzeichnet, dass**
1.5 die Antriebsflächen (13) und die Übergangsflächen (15) in einer von einer Stirnfläche (8) des Befestigungselements ausgehenden Vertiefung (9) ausgebildet sind,
1.6 die Wand (10) der Vertiefung (9) in mindestens einem axialen Bereich auf einer Zylindermantelfläche liegt, insbesondere in einem von der Stirnfläche (8) des Schraubenkopfs ausgehenden Bereich, **und**
1.7 **die Übergangsflächen (15) sich von der Antriebskante (14) jeweils einer Antriebsfläche (13) zu dem gegenüberliegenden Ende der Antriebsfläche (13) erstrecken.**

2. Antriebsausbildung für ein zu verschraubendes Befestigungselement, mit
2.1 mindestens zwei an dem Befestigungselement ausgebildeten zur Übertragung eines Drehmomentes bei Verdrehen mit einem Werkzeug in einer ersten Drehrichtung geeigneten Antriebsflächen (13), wobei
2.2 zwischen diesen Antriebsflächen (13) jeweils eine Übergangsfläche (15) angeordnet ist, wobei die Übergansflächen (15)
2.3 bei Verdrehen des Werkzeugs in der ersten Drehrichtung eine Führungsfläche für das Werkzeug bilden und
2.4 bei Angriff des Werkzeugs in der anderen Drehrichtung eine axiale Verschiebung des Werkzeugs nach außen bewirken,
**dadurch gekennzeichnet, dass**
2.5 die Antriebsflächen (13) sich radial nach außen erstrecken und
2.6 außerhalb der Übergangsflächen (15) die Außenseite (28) des Befestigungselements in einem Zylindermantel liegt, wobei 2.7 die Übergangsflächen (15) sich von der Antriebskante (14) jeweils einer Antriebsfläche (13) zu dem gegenüberliegenden Ende der Antriebsfläche (13) erstrecken.

3. Antriebsausbildung nach Anspruch 1, bei der die Übergangsflächen (15) als nach innen gerichtete Innenflächen oder als Außenflächen ausgebildet sind.

4. Antriebsausbildung nach einem der vorhergehenden Ansprüche, bei der die Antriebsflächen (13) in Radialebenen angeordnet sind.

5. Antriebsausbildung nach einem der vorhergehenden Ansprüche, bei der die Antriebsflächen (13) in einem Querschnitt durch die Antriebsausbildung jeweils auf einem Radius oder parallel zu einem Radius liegen.

6. Antriebsausbildung nach einem der vorhergehenden Ansprüche, bei der bei einer geradzahligen Anzahl von Antriebsflächen (13) jeweils zwei Antriebsflächen (13) im Querschnitt auf einem Durchmesser oder parallel zu einem Durchmesser verlaufen.

7. Antriebsausbildung nach einem der vorhergehenden Ansprüche, bei der die Antriebsflächen (13) in einem Längsschnitt durch die Antriebsausbildung parallel zur Achse oder in der Achse verlaufen.

8. Antriebsausbildung nach einem der vorhergehenden Ansprüche, bei der die Antriebsflächen (13) eine Antriebskante (14) bilden, wobei die Antriebskanten (14) aller Antriebsflächen (13) bei einer in einer Vertiefung ausgebildeten Antriebsausbildung in Richtung auf die Stirnseite (8) des Befestigungselements divergieren und bei einer an der Außenseite ausgebildeten Antriebsausbildung konvergieren.

9. Antriebsausbildung nach einem der vorhergehenden Ansprüche, bei der die Übergangsflächen (15) als Keilflächen ausgebildet sind.

10. Antriebsausbildung nach Anspruch 8 oder 9, bei der die Übergangsflächen (15) sich zwischen der Antriebskante (14) einer Antriebsfläche (13), der Verbindung der Antriebsfläche (13) mit dem Boden (12) der Vertiefung (9) und der Wand der Vertiefung (9) erstrecken.

11. Antriebsausbildung nach einem der vorhergehenden Ansprüche, mit einer ungeraden Anzahl von Antriebsflächen (13) und Übergangsflächen (15).

12. Antriebsausbildung nach einem der Ansprüche 3 bis 11, bei der die Vertiefung (9) mindestens teilweise einen in Richtung von der Stirnfläche (8) des Schraubenkopfs weg abnehmenden Querschnitt aufweist und/oder mindestens teilweise zylindrisch ausgebildet ist.

13. Antriebsausbildung nach einem der Ansprüche 3 bis 12, bei der die Vertiefung (9) in eine punktförmige Spitze ausläuft oder einen insbesondere ebenen Boden (12) aufweist.

14. Antriebsausbildung für einen Schraubendreher, dessen Eingriffsende eine der Antriebsausbildung nach einem der vorhergehenden Ansprüche komplementäre Form aufweist.

## Claims

1. A drive design for a fastening element to be screwed, comprising
1.1 at least two drive surfaces (13) formed on the fastening element for transmission of a torque suitable for rotation with a tool in a first rotation direction, wherein
1.2 between these drive surfaces (13) in each case one transition surface (15) is disposed, wherein said transition surfaces (15)
1.3 form a guide surface for the tool when rotating the tool in the first rotation direction and
1.4 upon engagement of the tool in the other rotation direction cause an axial outward displacement of the tool,
**characterized in that**
1.5 the drive surfaces (13) and the transition surfaces (15) are formed in a recess (9) originating from an end face (8) of the fastening element,
1.6 the wall (10) of the recess (9) lies at least in an axial section of a cylindrical jacket surface, particularly, in a section originating from the end face (8) of the screw head, and
1.7 the transition surfaces (15) extend between the drive edge (14) of a respective drive surface (13) to the opposite end of the drive surface (13).

2. A drive design for a fastening element to be screwed, comprising
2.1 at least two drive surfaces (13) formed on the fastening element for transmission of a torque suitable for rotation with a tool in a first rotation direction, wherein
2.2 between these drive surfaces (13) in each case one transition surface (15) is disposed, wherein said transition surfaces (15)
2.3 form a guide surface for the tool when rotating the tool in the first rotation direction and
2.4 upon engagement of the tool in the other rotation direction cause an axial outward displacement of the tool,
**characterized in that**
2.5 the drive surfaces (13) extend radially outwards, and
2.6 the outside surface (28) of the fastening element is located beyond the transition surfaces (15) in a cylindrical jacket surface, wherein
2.7 the transition surfaces (15) extend from the drive edge (14) of a respective drive surface (13) to the opposite end of the drive surface (13).

3. The drive design according to claim 1, wherein the transition surfaces (15) are formed as inwardly aligned inside surfaces or as outside surfaces.

4. The drive design according to any one of the preceding claims, wherein the drive surfaces (13) are disposed in radial planes.

5. The drive design according to any one of the preceding claims, wherein the drive surfaces (13) lie in a cross-section through the drive design respectively on a radius or parallel to a radius.

6. The drive design according to any one of the preceding claims, wherein with an even number of drive surfaces (13) respectively two drive surfaces (13) extend in the cross-section of a diameter or parallel to a diameter.

7. The drive design according to any one of the preceding claims, wherein the drive surfaces (13) extend in a longitudinal section through the drive design parallel to the axis or in the axis.

8. The drive design according to any one of the preceding claims, wherein the drive surfaces (13) form a drive edge (14), whereby the drive edges (14) of all drive surfaces (13) diverge in the direction of the end face (8) of the fastening element for a drive design formed in a recess and converge for a drive design formed on the outside.

9. The drive design according to any one of the preceding claims, wherein the transition surfaces (15) are formed as wedge-shaped surfaces.

10. The drive design according to claim 8 or 9, wherein the transition surfaces (15) extend between the drive edge (14) of a drive surface (13), the connection of the drive surface (13) with the bottom (12) of the recess (9) and the wall of the recess (9).

11. The drive design according to any one of the preceding claims, comprising an odd number of drive surfaces (13) and transition surfaces (15).

12. The drive design according to any one of the claims 3 to 11, wherein the recess (9) at least partially features a decreasing cross-section in the direction away from the end face (8) of the screw head and/or is partially at least formed cylindrical in shape.

13. The drive design according to any one of the claims 3 to 12, wherein the recess (9) converges into a pointed tip or features an in particular plane bottom (12).

14. A drive design for a screwdriver, the engagement end of which features a form that is complementary to the drive design according to any one of the preceding claims.

## Revendications

1. Agencement d'entraînement pour un élément de fixation à visser, avec
1.1 au moins deux faces d'entraînement (13) formées sur l'élément de fixation et convenant pour la transmission d'un couple de rotation lors de la rotation avec un outil dans un premier sens de rotation, dans lequel
1.2 une face de transition (15) est disposée respectivement entre ces deux faces d'entraînement (13), dans lequel les faces de transition (15) 1.3 forment une face de guidage pour l'outil lors de la rotation de l'outil dans le premier sens de rotation, et
1.4 provoquent un glissement axial de l'outil vers l'extérieur lors de l'action de l'outil dans l'autre sens de rotation,
**caractérisé en ce que**
1.5 les faces d'entraînement (13) et les faces de transition (15) sont formées dans un creux (9) partant de la face frontale (8) de l'élément de fixation,
1.6 la paroi (10) du creux (9) est située dans au moins une région axiale sur une surface latérale cylindrique, en particulier dans une région partant de la face frontale (8) de la tête de vis, et
1.7 les faces de transition (15) s'étendent de l'arête d'entraînement (14) respectivement d'une face d'entraînement (13) jusqu'à l'extrémité opposée de la face d'entraînement (13).

2. Agencement d'entraînement pour un élément de fixation à visser, avec
2.1 au moins deux faces d'entraînement (13) formées sur l'élément de fixation et convenant pour la transmission d'un couple de rotation lors de la rotation avec un outil dans un premier sens de rotation, dans lequel
2.2 une face de transition (15) est disposée respectivement entre ces deux faces d'entraînement (13), dans lequel les faces de transition (15)
2.3 forment une face de guidage pour l'outil lors de la rotation de l'outil dans le premier sens de rotation, et
2.4 provoquent un glissement axial de l'outil vers l'extérieur lors de l'action de l'outil dans l'autre sens de rotation,
**caractérisé en ce que**
2.5 les faces d'entraînement (13) s'étendent radialement vers l'extérieur, et
2.6 le côté extérieur (28) de l'élément de fixation se trouve dans une surface latérale cylindrique à l'extérieur des faces de transition (15), dans lequel
2.7 les faces de transition (15) s'étendent de l'arête d'entraînement (14) respectivement d'une face d'entraînement (13) jusqu'à l'extrémité opposée de la face d'entraînement (13).

3. Agencement d'entraînement selon la revendication 1, dans lequel les faces de transition (15) sont réalisées sous forme de faces intérieures ou de faces extérieures dirigées vers l'intérieur.

4. Agencement d'entraînement selon l'une quelconque des revendications précédentes, dans lequel les faces d'entraînement (13) sont disposées dans des plans radiaux.

5. Agencement d'entraînement selon l'une quelconque des revendications précédentes, dans lequel les faces d'entraînement (13) sont situées, dans une coupe transversale à travers l'agencement d'entraînement, respectivement sur un rayon ou parallèlement à un rayon.

6. Agencement d'entraînement selon l'une quelconque des revendications précédentes, dans lequel, dans le cas d'un nombre pair de faces d'entraînement (13), chaque fois deux faces d'entraînement (13) se trouvent dans la coupe transversale sur un diamètre ou parallèlement à un diamètre.

7. Agencement d'entraînement selon l'une quelconque des revendications précédentes, dans lequel les faces d'entraînement (13) s'étendent, dans une coupe longitudinale à travers l'agencement d'entrainement, parallèlement à l'axe ou sur l'axe.

8. Agencement d'entraînement selon l'une quelconque des revendications précédentes, dans lequel les faces d'entraînement (13) forment une arête d'entraînement (14), dans lequel les arêtes d'entraînement (14) de toutes les faces d'entraînement (13) divergent en direction de la face frontale (8) de l'élément de fixation dans le cas d'un agencement d'entraînement réalisé dans un creux et convergent dans le cas d'un agencement d'entraînement réalisé sur le côté extérieur.

9. Agencement d'entraînement selon l'une quelconque des revendications précédentes, dans lequel les faces de transition (15) sont réalisées comme des faces en coin.

10. Agencement d'entraînement selon la revendication 8 ou 9, dans lequel les faces de transition (15) s'étendent entre l'arête d'entraînement (14) d'une face d'entraînement (13), la jonction de la face d'entraînement (13) avec le fond (12) du creux (9) et la paroi du creux (9).

11. Agencement d'entraînement selon l'une quelconque des revendications précédentes, avec un nombre impair de faces d'entraînement (13) et de faces de transition (15) .

12. Agencement d'entraînement selon l'une quelconque des revendications 3 à 11, dans lequel le creux (9) présente au moins partiellement une section transversale qui diminue dans la direction partant de la face frontale (8) de la tête de vis et/ou est de forme au moins partiellement cylindrique.

13. Agencement d'entraînement selon l'une quelconque des revendications 3 à 12, dans lequel le creux (9) se termine en une pointe ponctuelle ou présente un fond (12) en particulier plat.

14. Agencement d'entraînement pour un tournevis, dont l'extrémité d'engagement présente une forme complémentaire à l'agencement d'entraînement selon l'une quelconque des revendications précédentes.
